Europäisches Patentamt

European Patent Office

Office européen des brevets

(19)

(11) Numéro de publication : **0 479 687 A1**

(12) **DEMANDE DE BREVET EUROPEEN**

(21) Numéro de dépôt : **91420336.9**

(22) Date de dépôt : **23.09.91**

(51) Int. Cl.⁵ : **B29C 51/14, B65D 1/28**

(30) Priorité : **26.09.90 FR 9012083**

(43) Date de publication de la demande :
**08.04.92 Bulletin 92/15**

(84) Etats contractants désignés :
**DE ES FR GB IT**

(71) Demandeur : **CEBAL**
**98, boulevard Victor Hugo**
**F-92115 Clichy (FR)**

(72) Inventeur : **Jouillat, Jean-François**
**La Sauvagère, Le Gué des Loges, Clefs**
**F-49150 Bauge (FR)**
Inventeur : **Philippe, Michel**
**4, chemin du Port au Prince**
**F-38200 Vienne (FR)**
Inventeur : **Rea, Jean**
**38, chemin du Moly**
**F-69230 St Genis Laval (FR)**

(74) Mandataire : **Séraphin, Léon et al**
**PECHINEY 28, rue de Bonnel**
**F-69433 Lyon Cedex 03 (FR)**

(54) **Recipient creux semi-rigide en matière plastique multichouche, son procédé de fabrication et son utilisation.**

(57)    L'invention a pour objet un récipient creux (18) semi-rigide en matière plastique multicouche, ayant une ouverture large (25) suivie d'une paroi latérale (23) et d'un fond, sa surface extérieure (110) appartenant à une couche mince d'une première matière plastique et sa surface intérieure appartenant à une couche plus épaisse en PP, caractérisé en ce que ladite couche mince est en PA et d'épaisseur comprise entre 3 et 20 micromètres, et en ce que ladite couche en PP est d'épaisseur comprise entre 0,1 et 0,8 mm, ledit récipient (18) restant sans poussières au bout d'au moins un mois à partir de sa fabrication et ayant une résistance à la compression axiale élevée. L'invention a aussi pour objet le procédé de fabrication du récipient et son utilisation en congélation, elle s'applique au domaine des récipients alimentaires.

FIG. 5

EP 0 479 687 A1

EP 0 479 687 A1

L'invention concerne un récipient creux en matière plastique, sa fabrication par conformation à chaud et son utilisation en particulier en congélation.

Par le document DE-A-2848736, on connaît un récipient creux en matière plastique, du type à ouverture large suivie d'une paroi latérale et d'un fond, ayant une couche extérieure mince en une première matière plastique de point de fusion 200 à 260°C et une couche intérieure épaisse en une seconde matière plastique, du PVC ou du PP, de point de fusion compris entre 120 et 180°C.

Dans la fabrication du récipient, par emboutissage profond à chaud, sous vide et/ou sous pression, on utilise des feuille et bande de première et seconde matière plastique soit distinctes et superposées, soit liées entre elles, et on opère ladite conformation à une température de déformation plastique de la seconde matière plastique (bande ou couche épaisse de 0,1 à 0,5 mm), la première matière plastique en feuille ou couche mince, d'épaisseur 10 à 40 micromètres et en polyester, étant alors dans un état de déformation élastique. La présence de cette feuille ou couche mince de la première matière plastique empêche les trous et déchirures qui se produisaient dans une telle conformation à chaud de la seconde matière plastique.

Dans la fabrication par thermoformage de récipients creux en polypropylène, on a remarqué que de tels récipients, qui ont une surface extérieure d'aspect mat, se salissent assez vite (en dix jours) par des poussières au stockage. On a remarqué de plus que leur épaisseur était fortement variable. Les enseignements du document cité ne permettent pas de remédier à ces inconvénients, et la demanderesse a cherché une solution permettant de les éliminer au moins en partie.

## EXPOSE DE L'INVENTION

L'invention a pour objet un récipient creux semi-rigide en matière plastique multicouche, ayant une ouverture large suivie d'une paroi latérale et d'un fond, sa surface extérieure appartenant à une couche mince d'une première matière plastique et sa surface intérieure apartenant à une couche plus épaisse en PP, caractérisé en ce que ladite couche mince est en PA et d'épaisseur comprise entre 3 et 20 micromètres, et en ce que ladite couche en PP est d'épaisseur comprise entre 0,1 et 0,8 mm, ledit récipient restant sans poussière au bout d'au moins un mois à partir de sa fabrication et ayant une résistance à la compression axiale élevée. Ce récipient a une régularité d'épaisseur fortement améliorée.

Le PA est utilisé dans des assemblages mécaniques, par exemple pour des paliers, il a l'inconvénient connu de reprendre l'humidité, ce qui le fait gonfler. Son utilisation dans des récipients semi-rigides thermoformés est à notre connaissance nouvelle.

Les récipients de l'invention restent propres, sans poussières, pendant plusieurs mois, alors que des récipients de même géométrie en PP (polypropylène) se recouvrent de poussières dans une même atmosphère ou ambiance en moins d'une journée. De plus, lorsque, après un long stockage, quelques poussières revêtent un récipient selon l'invention, ces poussières ne sont pas adhérentes et sont facilement essuyées.

Malgré l'épaisseur très faible de PA, on observe que la résistance à la compression axiale d'un récipient est très fortement améliorée, passant typiquement de 200 N à 350 N, ce qui est intéressant pour les empilements au stockage de récipients pleins. Le rôle d'armature que joue le PA en couche si mince est tout à fait surprenant. De façon également surprenante, l'épaisseur qui est fortement variable, par exemple de 0,2 à 0,6 mm, dans la paroi latérale des récipients en PP seul, est beaucoup plus régulière dans les récipients de l'invention et de 0,35 à 0,45 mm dans la paroi correspondante.

Vis-à-vis de cette régularité d'épaisseur et de la facilité de fabrication, il est préférable d'exclure des variétés de PA utilisées les PA11 et PA12 qui ont des points de fusion supérieurs de moins de 20°C au point de fusion du PP, et constituent donc pour la conformation à chaud en récipient de moins bons raidisseurs que les autres polyamides. Dans le cas des PA alors retenus, la paroi latérale des récipients selon l'invention a une épaisseur constante à mieux que 10% près dans toute section parallèle à l'ouverture de ces récipients.

Lorsque la surface extérieure du récipient est brillante, le récipient reste sans poussières au bout d'au moins 3 mois à partir de sa fabrication.

Dans les récipients creux selon l'invention les plus courants, ayant une ouverture large d'extrémité de diamètre compris entre 50 et 150 mm, une couche extérieure en PA d'épaisseur 5 à 15 micromètres, et une paroi latérale d'épaisseur comprise entre 0,1 et 0,8 mm, la résistance à la compression axiale est supérieure à 300 N.

Cette résistance à la compression axiale est améliorée et supérieure à 330 N lorsque la paroi latérale du récipient porte juste au-dessus du fond un épaississement intérieure de 0,1 à 0,5 mm par rapport à ladite paroi latérale et de 2 à 6 mm de hauteur.

Les récipients creux selon l'invention peuvent comporter une couche intermédiaire en matière plastique barrière, d'épaisseur comprise entre 1 et 30 micromètres, typiquement de l'EVOH, ou du PVDC ou du polyamide NMXD6.

2

L'invention a encore pour objet un procédé de fabrication d'un récipient creux semi-rigide en matière plastique multicouche, utilisable pour l'obtention du récipient de l'invention, dans lequel on prépare ou on approvisionne une bande multicouche d'épaisseur totale comprise entre 0,15 et 3 mm comprenant une couche superficielle mince d'une première matière plastique d'épaisseur comprise entre 10 et 60 micromètres liée à une couche plus épaisse en PP, en ce qu'on réchauffe ladite bande à une température de ramollissement du PP, typiquement entre 148 et 164°C, et en ce qu'on la conforme à ladite température en ledit récipient en l'appliquant sur ou dans un outillage par dépression, ladite couche mince étant à l'extérieur de la conformation, et en ce qu'on découpe et on dégage le récipient ainsi conformé dudit outillage caractérisé en ce que:

(a) on choisit comme première matière plastique du PA;

(b) on réalise ladite bande multicouche en appliquant l'un contre l'autre par passage entre des cylindres refroidisseurs et de calibrage d'une part un film de PA revêtu d'une couche d'adhésif vis-à-vis de PP et éventuellement d'une couche mince de PP et d'autre part une bande de PP à l'état fondu, l'écartement desdits cylindres étant inférieur à l'épaisseur totale dudit film revêtu et de ladite bande à l'état fondu et compris entre 0,15 et 3 mm,

le récipient obtenu par ladite conformation restant sans poussières au bout d'au moins un mois à partir de sa fabrication et ayant une résistance à la compression axiale élevée.

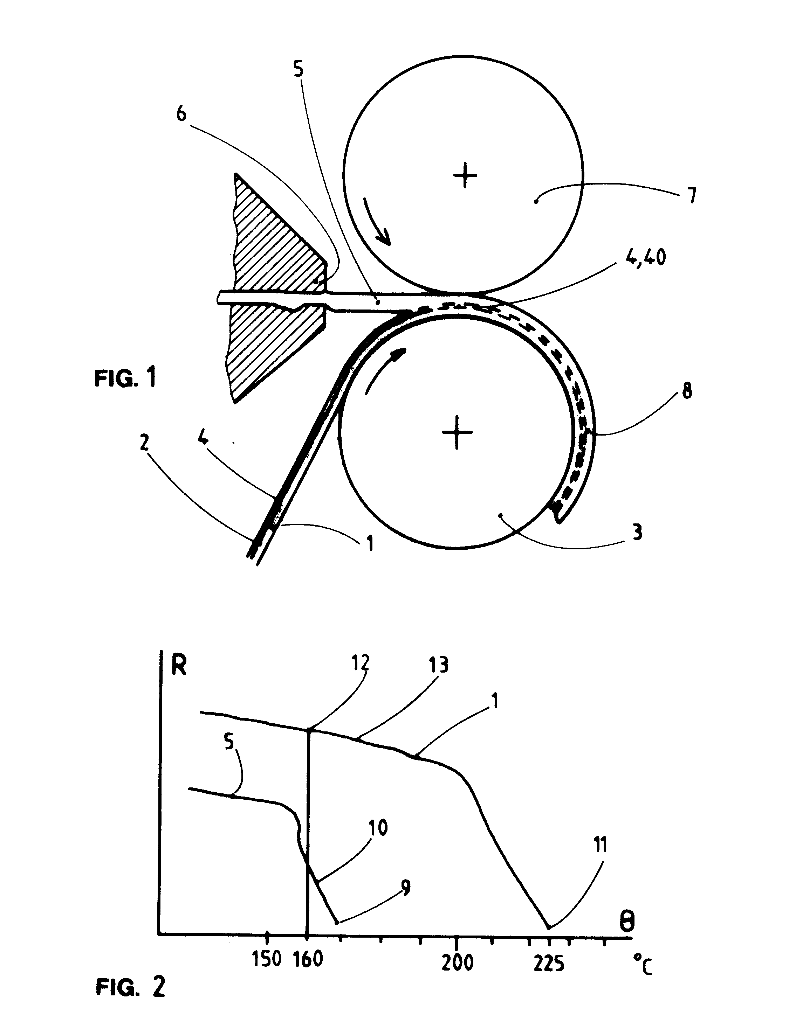

Comme cela est illustré par la figure 1, la couche mince ou film de PA ou "première matière plastique" n'est pas encore dans sa zone de ramollissement lors de la conformation à chaud en récipient.

Une interprétation est que alors elle s'allonge de façon relativement régulière et que, relativement raide mais mince, elle s'applique intimement contre le moule.

La couche support de PP est beaucoup plus molle et accompagne alors cette couche fine de première matière plastique, ceci ne permettant pas de prévoir la diminution surprenante des variations d'épaisseur de la paroi du récipient multicouche.

Le fait que la surface extérieure de ce récipient reste longtemps propre est sans doute à relier à des propriétés "antistatiques" de la première matière plastique, un PA, mais l'importance de cette caractéristique est inattendue compte tenu de la déformation importante à chaud qui a précédé. On a observé que cette caractéristique n'était pas modifiée par une décoration, typiquement par encres d'impression.

Lorsqu'on réalise une bande multicouche en utilisant une bande mince ou film de première matière plastique brillante, ce film étant extrudé et calibré entre des cylindres refroidisseurs polis, on obtient des récipients creux ayant une surface extérieure brillante restant proore encore plus longtemps qu'une surface mate de même nature. Une telle surface brillante ne se recouvre pas de poussières au moins 10 fois plus longtemps que la surface extérieure d'un récipient de comparaison homogène en PP. Cette surface extérieure est restée brillante malgré l'importante déformation à chaud, et son comportement "antistatique" fortement amélioré est étonnant après une telle déformation.

On choisit comme matière plastique support du PP, plus particulièrement intéressant pour des récipients alimentaires rigides ou semi-rigides, ce PP étant de préférence obtenu par fusion de PP et de 10 à 50% de déchets de découpage desdits récipients ou des portions à conformer en récipients. Et on lui associe une première matière plastique du groupe constitué par les PA (polyamides), de préférence à l'exception des PA11 et PA12.

Les PA11 et PA12 ont des températures de fusion respectivement de 183-187°C et de 176-180°C, peu élevées par rapport à la température de fusion "168-169°C" du PP, de sorte que la baisse de leur résistance mécanique ou même leur ramollissement apparaît à la température de formage de l'invention (autour de 160°C) et nuit aux caractéristiques du récipient creux obtenu. Les PA ainsi sélectionnés sont particulièrement intéressants par leur bonne aptitude à la conformation à chaud selon l'invention, ils permettent d'obtenir une bien meilleure régularité d'épaisseur du récipient creux conformée, comme déjà vu.

La conformation à chaud est effectuée typiquement par la technique appelée thermoformage. On y applique une portion de la bande multicouche contre la surface intérieure d'un outillage creux comportant des évents, c'est-à-dire des orifices d'évacuation de l'air emprisonné entre la bande et l'outillage par cette application, ladite surface intérieure définissant la surface extérieure du récipient creux à obtenir.

L'opération est de préférence exécutée en deux étapes lorsque le récipient est relativement profond, par exemple de profondeur supérieure à 0,5 fois sa plus grande largeur: formage d'approche avec un poinçon isolant, puis conformation: plaquage contre l'outillage par soufflage d'air ou par aspiration et vide à travers les évents.

On a remarqué, et cela est important pour la fabrication, que la température de formage de la bande multicouche selon l'invention était beaucoup moins critique que la température de formage d'un bande homogène en PP dans l'état ramolli: elle peut ainsi varier de plus ou moins 5°C pour du PP plaqué de PA, soit être typiquement comprise entre 155 et 165°C, au lieu de plus ou moins 2°C, par suite de difficultés de formage ou de perçage de l'ébauche ramollie en dehors de cet intervalle de température, typiquement 158 à 162°C dans le cas d'une bande homogène en PP.

On réalise de façon avantageuse la bande multicouche selon l'invention en appliquant l'un contre l'autre par passage entre des cylindres refroidisseurs et de calibrage un film de PA et une bande de PP à l'état fondu, ledit film ou ladite bande étant muni(e) d'un moyen adhésif vis-à-vis de ladite bande ou dudit film. La bande mince ou film de première matière plastique est alors amenée à la température ambiante ou à une température typiquement inférieure à 80°C, elle s'enroule sur un des cylindres et est réchauffée en surface par l'application de la deuxième matière plastique, le moyen adhésif revêtent le film étant noyé dans le PP fondant et assurant alors la liaison de la bande multicouche formée. On peut aussi utiliser un film PA/adhésif/PP plus facile à manipuler et se soudant parfaitement par sa face PP au PP fondu.

Le moyen adhésif approprié, réalisant une liaison qui résiste audit formage à chaud, peut être choisi parmi les espèces suivantes selon le cas particulier considéré et après essai préalable si cela est utile:

– le PP modifié par l'acide acrylique ou l'anhydride et/ou l'acide maléique ou l'acide méthacrylique;

– les résines ionomères;

– les copolymères d'éthylène et d'acide acrylique ou d'alpha-oléfine modifiées ou non par acide acrylique ou acide méthacrylique ou acide ou anhydride maléique;

– les terpolymères d'éthylène, acrylate de butyle et anhydride maléique.

On peut également inclure dans la bande multicouche selon l'invention une couche intermédiaire en matière plastique barrière, typiquement en EVOH, en PVDC ou en polyamide aromatique NMXD6, l'épaisseur de cette couche pouvant fortement varier, à titre indicatif entre 2 et 120 micromètres, selon l'effet barrière souhaité. Cette couche intermédiaire est alors fixée typiquement avec un des adhésifs précédents à la bande mince ou film de première matière plastique, et vient adhérer ensuite à la bande de première matière plastique à l'état fondu appliquée contre elle, la liaison à cette bande par moyen adhésif étant assurée de la même façon que pour un film de première matière plastique.

## AVANTAGE DE L'INVENTION

– Obtention de récipients d'épaisseur beaucoup plus régulière

– Obtention d'une surface extérieure anti-poussières (astatique), surtout lorsque cette surface est brillante.

– cette surface extérieure se prête particulièrement bien à l'impression on peut supprimer le traitement péalable par effet CORONA ou par flammage.

– Obtention de ces récipients, avec ou sans couche barrière intermédiaire, par la même technique de thermoformage que celle des récipients en PP seul.

– Les PA ont une bonne tenue au choc à froid alors que le PP devient fragile. Les récipients de l'invention armés d'une fine couche de PA ont une tenue au choc étonnamment améliorée et sont utilisés avantageusement pour le stockage de produits alimentaires congelés, entre -10 et -40°C.

## EXEMPLES ET ESSAIS

La figure 1 représente un dispositif de réalisation d'une bande multicouche selon l'invention, en coupe partielle perpendiculaire aux surfaces de cette bande.

La figure 2 représente les propriétés des couches en PA et en PP de cette bande vis-à-vis du thermoformage.

Les figures 3 et 4 représentent le thermoformage de cette bande.

Les figures 5 et 6 représentent un récipient obtenu à partir de cette bande, en perspective cavalière et en coupe.

La figure 7 est en coupe d'un récipient semblable ayant une couche barrière intermédiaire.

Sur la figure 1, on voit une bande brillante ou film 1 en PA6 d'épaisseur 30 micromètres revêtue sur sa face 2 extérieure au cylindre d'enroulement 3 d'une couche d'adhésif 4, ici de l'EAA, d'épaisseur 15 micromètres. Cette bande 1 et 4 est entraînée par le cylindre refroidi 3 jusqu'à être rejointe par la bande 5 de PP fondu, de température 210°C, qui vient d'être extrudée par la filière 6. La bande 1 et 4 est à une température ambiante ou limitée à moins de 70°C. Les deux cylindres refroidisseurs 3 et 7 ont une température comprise entre 10 et 40°C, leur écartement est réglé à 1,5 mm. Avec effet de compression par laminage, la bande multicouche 8 se trouve constituée par l'application du PP 5 contre l'adhésif 4 et son support 1 en PA6.

La couche d'adhésif 4 fond alors au moins en surface et assure une excellente liaison 40 pour le multicouche 8.

La figure 2 représente schématiquement les courbes (charge de rupture, température) des deux matières plastiques ici essentielles, le PP repéré 5 et le PA6 repéré 1.

Le PP a un point de fusion 9 de 168-169°C et, juste avant, une zone de ramollissement rapide 10 de sorte que le thermoformage d'un récipient creux est fait à 160°C avec une tolérance de température faible. Le PA6 a un point de fusion 11 de 225°C, et à 160°C il est encore dans une situation 12 de charge de rupture élevée, à l'intérieur d'un domaine 13 où la charge de rupture ne varie que faiblement avec la température. Le PA6 est en couche mince, sa résistance mécanique n'intervient que faiblement dans la résistance à la déformation à chaud du multicouche 8.

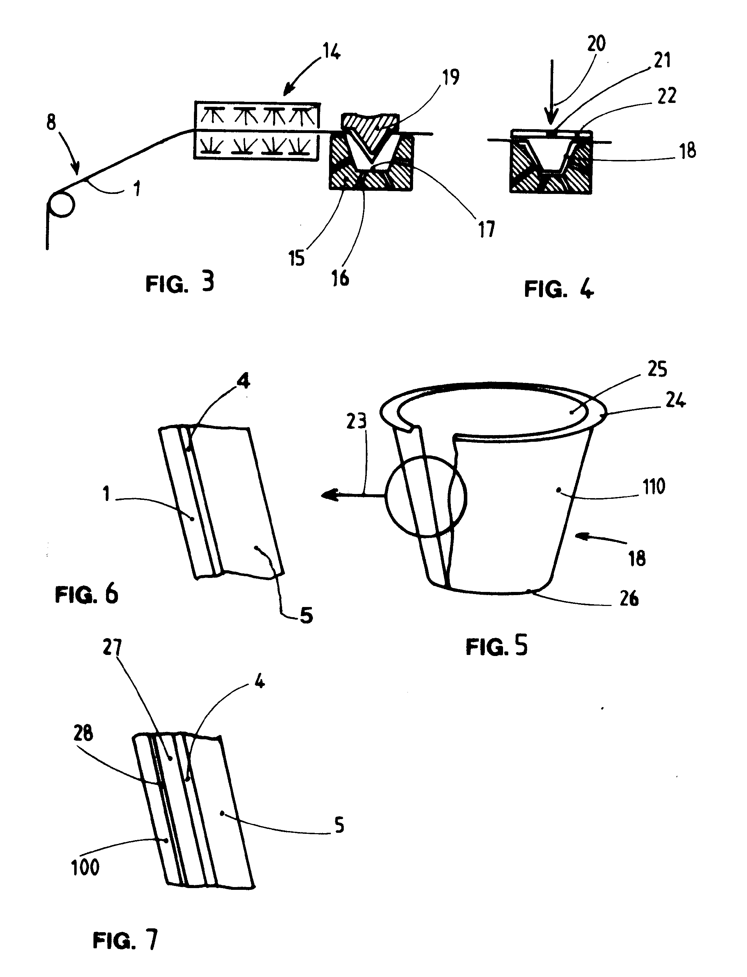

La bande multicouche 8 est ensuite renvoyée, face brillante 1 vers le bas, jusqu'à des moyens de chauffage 14 qui l'amènent à 160°C plus ou moins 2°C au moment du thermoformage dans un outillage creux 15 ayant des orifices ou canaux 16 d'évacuation de l'air emprisonné entre sa surface intérieure 17 et le récipient formé 18 (figures 3 et 4).

Le formage comprend une prédéformation en creux avec un poinçon isolant 19, puis une injection d'air comprimé (flèche 20) par l'orifice 21 d'un couvercle 22 fermant le haut du récipient 18. Le récipient est ensuite découpé et extrait de l'outillage.

La figure 5 représente un récipient obtenu 18, appartenant à une série d'une dizaine de récipients. Le récipient 18 a pour dimensions: diamètre extérieure du fond 26 = 93 mm, hauteur 83 mm. La région écorchée repérée par un cercle et une flèche 23 correspond à la paroi latérale et à la structure en coupe représentée sur la figure 6. L'épaisseur moyenne est de 0,4 mm, alors que l'épaisseur avant formage est de 1,5 mm. On y distingue une couche extérieure 1 de PA6, avec une surface extérieure 110 brillante uniformément, d'épaisseur régulière 8 à 9 micromètres dans la région tronconique et avec des strictions à 5 micromètres dans les angles, puis une couche très fine 4 d'adhésif, puis une couche intérieure épaisse 5 de PP. L'épaisseur totale du récipient 18 sur toute sa hauteur tronconique varie peu circonférentiellement, par exemple de 0,37 à 0,43 mm dans une section donnée, ce qui est très étonnant par rapport aux variations d'épaisseur correspondantes (0,2 à 0,6 mm) des récipients semblables en PP seul, thermoformés également à 160°C plus ou moins 2°C. La surface intérieure en PP est mate.

## AUTRES ESSAIS

A) On a thermoformé d'autres récipients creux 18 en décalant la température de thermoformage soit vers le haut soit vers le bas, les températures testées allant de 155 à 165°C. On a obtenu des récipients sans incident. La couche de PA6 donne ainsi une sécurité et une qualité de résultats inattendues.

B) On a stocké côte à côte:
(a) 5 récipients brillantes 18 selon l'invention recouverts de PA6;
(b) 5 récipients mats selon l'invention, de mêmes structure et géométrie;
(c) 10 récipients brillants en PP seul, de même géométrie;
(d) 5 récipients brillants en PP traité avec 0,5 à 1% d'adhésif antistatique dans la masse du PP.
On a constaté que:
– les récipients (A) restent propres au bout de 3 mois, tandis que les récipients (b) présentent seulement quelques poussières;
– les récipients (c) se recouvrent de poussières en quelques heures (en moins d'un jour);
– les récipients (d) se sont couverts de poussières après 10 jours. L'additif antistatique n'a donc pas un effet durable
On a en outre mesuré la résistance à la compression axiale de deux récipients de chaque sorte, l'effort étant appliqué sur le fond du récipient renversé sur un support plan. Les récipients (a) et (b) montrent une diminution de hauteur à partir d'un effort de 340 à 360 N, tandis que les récipients (c) et (d) ont une diminution de hauteur à partir de 190 à 210 N. Le revêtement de 8 à 9 micromètres de PA des récipients de l'invention (a) et (b) a ainsi un rôle d'armature surprenant.

C) On intercale une couche d'EVOH, barrière contre l'oxygène, comme couche intermédiaire d'un multicouche contenant du PA6-6. Les épaisseurs des couches successives dans la bande multicouche sont alors, depuis une face extérieure brillante en PA6-6:
PA6-6      30 micromètres; adhésif EAA 10 micromètres;
EVOH      70 micromètres; adhésif EAA 10 micromètres; PP complément à 1,5 mm.
On a fabriqué le même type de récipients que précédemment, avec la même température de formage. Les épaisseurs des couches dans leur portion tronconique sont (figure 7);
couche 100 de PA6-6 de 9 micromètres; couche 27 d'EVOH de 19 micromètres encadrée par deux couches très fines 28 et 4 d'adhésif EAA, puis couche 5 de PP complétant l'épaisseur de 1,5 mm.

## APPLICATIONS INDUSTRIELLES

Applications importantes dans le domaine des récipients alimentaire et pour la congélation des aliments.

**Revendications**

1. Récipient creux (18) semi-rigide en matière plastique multicouche, ayant une ouverture large (25) suivie d'une paroi latérale (23) et d'un fond (5), sa surface extérieure (110) appartenant à une couche mince (1) d'une première matière plastique et sa surface intérieure appartenant à une couche plus épaisse (5) en PP, caractérisé en ce que ladite couche mince (1) est en PA et d'épaisseur comprise entre 3 et 20 micromètres, et en ce que ladite couche (5) en PP est d'épaisseur comprise entre 0,1 et 0,8 mm, ledit récipient (18) restant sans poussières au bout d'au moins un mois à partir de sa fabrication et ayant une résistance à la compression axiale élevée.

2. Récipient selon la revendication 1, dont la couche extérieure mince (1) est en PA à l'exception des PA11 et PA12, ladite paroi latérale (23) comprenant les couches (1) et (5) ayant une épaisseur constante à mieux que 10% près dans toute section parallèle à ladite ouverture (25).

3. Récipient selon l'une quelconque des revendications 1 ou 2, dont la surface extérieure (110) est brillante, ledit récipient (18) restant sans poussières au bout d'au moins 3 mois à partir de sa fabrication.

4. Récipient selon la revendication 2, ayant une ouverture large (25) de diamètre compris entre 50 et 150 mm, une couche extérieure (1) d'épaisseur 5 à 15 micromètres, et une paroi latérale (23) d'épaisseur comprise entre 0,1 et 0,8 mm, ledit récipient ayant une résistance à la compression axiale supérieure à 300 N.

5. Récipient selon la revendication 4, dont la paroi latérale (23) porte juste au-dessus de son fond un épaississement intérieur de 0,1 à 0,5 mm par rapport à ladite paroi latérale (23) et de 2 à 6 mm de hauteur, ladite résistance à la compression axiale étant supérieure à 330 N.

6. Récipient selon l'une quelconque des revendications 1 à 5, ayant une couche intermédiaire (27) en matière plastique barrière du groupe formé par : l'EVOH, le PVDC et le polyamide aromatique NMXD6, l'épaisseur de cette couche (27) étant comprise entre 1 et 30 micromètres.

7. Procédé de fabrication d'un récipient creux (18) semi-rigide en matière plastique multicouche, utilisable pour l'obtention du récipient de l'une quelconque des revendications 1 à 6, dans lequel on prépare ou on approvisionne une bande multicouche (8) d'épaisseur totale comprise entre 0,15 et 3 mm comprenant une couche superficielle mince (1) d'une première matière plastique d'épaisseur comprise entre 10 et 60 micromètres liée à une couche plus épaisse (5) en PP, en ce qu'on réchauffe ladite bande (8) à une température de ramollissement du PP et en ce qu'on la conforme à ladite température en ledit récipient (18) en l'appliquant sur ou dans un outillage (15) par dépression, ladite couche mince (1) étant à l'extérieur de la conformation, et en ce qu'on découpe et on dégage le récipient ainsi conformé (18) dudit outillage (15), caractérisé en ce que:

   (a) on choisit comme première matière plastique du PA;

   (b) on réalise ladite bande multicouche (8) en appliquant l'un contre l'autre par passage entre des cylindres refroidisseurs et de calibrage (3 et 7) d'une part un film (1) de PA revêtu d'une couche (4) d'adhésif vis-à-vis de PP et éventuellement d'une couche mince de PP et d'autre part une bande (5) de PP à l'état fondu, l'écartement desdits cylindres (3 et 7) étant inférieur à l'épaisseur totale dudit film (1) revêtu et de ladite bande (5) à l'état fondu et compris entre 0,15 et 3 mm,

   le récipient (18) obtenu par ladite conformation restant sans poussières au bout d'au moins un mois à partir de sa fabrication et ayant une résistance à la compression axiale élevée.

8. Procédé selon la revendication 7, dans lequel on choisit pour le film (1) un PA à l'exception des PA11 et PA12, obtenant ainsi une excellente régularité d'épaisseur du récipient creux (18).

9. Procédé selon l'une quelconque des revendications 7 ou 8, dans lequel la bande (5) de PP à l'état fondu est obtenue par fusion de PP et de 10 à 50% de déchets de la fabrication desdits récipients (18).

10. Procédé selon la revendication 7, dans lequel on réalise ladite bande multicouche (8) avec une couche intermédiaire (27) en matière plastique barrière du groupe formé par: l'EVOH, le PVDC et le polyamide aromatique NMXD6, en épaisseur comprise entre 2 et 120 micromètres, cette couche intermédiaire étant liée auxdites première et deuxième couches par des moyens adhésifs (28 et 4).

**11.** Procédé selon l'une quelconque des revendications 7 ou 10, dans lequel on choisit le ou les moyens adhésifs (4,28) dans le groupe formé par:
- le PP modifié par l'acide acrylique ou l'anhydre et/ou l'acide maléique ou l'acide méthacrylique;
- les résines ionomères;
- les copolymères d'éthylène et d'acide acrylique ou d'alpha-oléfine modifiés ou non par acide acrylique ou acide méthacrylique ou acide ou anhydride maléique;
- les terpolymères d'éthylène, acrylate de butyle et anhydride maléique.

**12.** Procédé selon la revendication 7, dans lequel on remplace la couche d'adhésif (4) du film (1) par une substance adhésive noyée dans la bande (5) de PP à l'état fondu.

**13.** Utilisation du récipient de l'une quelconque des revendications 1 à 6 pour la conservation de produits alimentaires entre -10 et -40°C.

FIG. 1

FIG. 2

8

FIG. 3

FIG. 4

FIG. 6

FIG. 5

FIG. 7

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-2 848 736 (K-H. SENGEWALD)<br>* le document en entier *<br>--- | 1-13 | B29C51/14<br>B65D1/28 |
| Y | H. DOMININGHAUS 'KUNSTSTOFFE UND IHRE EIGENSCHAFTEN'<br>1988 , VDI VERLAG , DÜSSELDORF DE<br>* page 408 - page 409; tableau 49 *<br>* page 431 - page 433 *<br>* page 845; tableau 1 *<br>--- | 1-13 | |
| A | US-A-4 882 894 (M.R. HAVENS ET AL.)<br>* colonne 1, ligne 14 - colonne 1, ligne 63 *<br>* colonne 8, ligne 46 - colonne 8, ligne 49 *<br>* colonne 10, ligne 12 - colonne 10, ligne 44 *<br>--- | 1,7,11 | |
| A | JAPANESE PATENTS GAZETTE<br>Section Ch, week 8723, 22 July 1987<br>Derwent Publications Ltd., London GB<br>* Class A, page 7, no. J6 2094-563-A *<br>& JP-A-62094563 (IDEMITSU PETROCHEM K.K.) 1 May 1987<br>--- | 1,7 | |
| A | US-A-4 430 288 (L.J. BONIS)<br>* le document en entier *<br>--- | | **DOMAINES TECHNIQUES RECHERCHES (Int. Cl.5)**<br><br>B29C<br>B65D |
| A | EP-A-0 026 954 (WAVIN B.V.)<br>* le document en entier *<br>--- | | |
| A | PATENT ABSTRACTS OF JAPAN<br>vol. 7, no. 9 (M-185)(1154) 14 Janvier 1983<br>& JP-A-57 167 212 ( MITSUBIHI DENKI K.K. ) 15 Octobre 1982<br>* le document en entier *<br>--- | | |
| A | PATENT ABSTRACTS OF JAPAN<br>vol. 9, no. 322 (M-440)(2045) 18 Décembre 1985<br>& JP-A-60 157 838 ( MEIWA SANGYO   K.K. ) 19 Août 1985<br>* le document en entier *<br>--- | | |

Le présent rapport a été établi pour toutes les revendications

| Lieu de la recherche | Date d'achèvement de la recherche | Examinateur |
|---|---|---|
| LA HAYE | 16 JANVIER 1992 | SZAMOCKI |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................
& : membre de la même famille, document correspondant

EPO FORM 1503 03.82 (P0402)

EP 0 479 687 A1

Office européen
des brevets

**RAPPORT DE RECHERCHE EUROPEENNE**

Numero de la demande

EP    91 42 0336
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 363 595 (ALKOR G.M.B.H. KUNSTSTOFFE) --- | | |
| A | DE-A-3 240 792 (CHISSO CORP.) --- | | |
| A | FR-A-1 025 217 (GOODYEAR AIRCRAFT CORP.) ----- | | |

**DOMAINES TECHNIQUES RECHERCHES (Int. Cl.5)**

Le présent rapport a été établi pour toutes les revendications

| Lieu de la recherche | Date d'achèvement de la recherche | Examinateur |
|---|---|---|
| LA HAYE | 16 JANVIER 1992 | SZAMOCKI |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
............................................................................
& : membre de la même famille, document correspondant

EPO FORM 1503 03.82 (P0402)

11